# FASCICULE DE BREVET EUROPEEN

(11) **EP 2 166 828 B1**
(45) Date de publication et mention de la délivrance du brevet: **05.10.2011**
(21) Numéro de dépôt: 08826217.5
(22) Date de dépôt: 12.06.2008
(51) Int. Cl.: A01B 1/02

(54) **DISPOSITIF ARTICULE POUR OUTIL DE JARDIN**
SCHWENKVORRICHTUNG FÜR EIN GARTENWERKZEUG
ARTICULATED DEVICE FOR A GARDEN TOOL

(30) Priorité: 12.06.2007 FR 0704176
(43) Date de publication de la demande: 31.03.2010
(73) Titulaire: Etablissements Perrin, 21120 Til Chatel (FR)
(72) Inventeur: HAUVILLE, Jean, F-89660 Montillot (FR)
(74) Mandataire: Oudin, Stéphane
(86) Numéro de dépôt international: PCT/FR2008/000815
(87) Numéro de publication internationale: WO 2009/007545

(56) Documents cités:
- WO-A-96/41513
- DE-C- 207 077
- FR-A- 2 890 283

## Description

La présente invention concerne un dispositif articulé, compact et ergonomique pour outil de jardin, par exemple une bêche, comportant une articulation entre le manche et la partie tranchante et permettant notamment de déterrer, déraciner et replanter proprement et sans efforts diverses plantations.

Pour réaliser de tels travaux de jardinage, on connaît le louchet "classique" composé d'un fer métallique tranchant en forme générale de rectangle allongé muni sur le dessus d'un manchon dans lequel vient s'enfoncer un manche de préférence en bois. Avec ce type d'outil, le jardinier doit faire pénétrer verticalement le fer métallique dans le sol, en appuyant à l'aide de son pied sur le haut du fer, puis incliner le manche vers l'arrière presque jusqu'au sol, et enfin de soulever l'outil avec la motte de terre et la plante contenues dans le fer métallique en maintenant l'ensemble en position quasi-horizontale, afin de ne rien faire tomber par terre durant le trajet jusqu'au lieu de replantation. Cette succession d'opérations demande des efforts physiques importants et provoque un affaissement et une dégradation du terrain autour du trou ainsi réalisé.

On connaît aussi une bêche articulée comme celle décrite dans la demande française de brevet d'invention publiée sous le numéro FR 2 890 283. Cette bêche possède une articulation située dans l'espace du manchon enserrant le manche et dont le mouvement est contrôlé par une pédale maintenue en position avec un ressort, mise en mouvement à l'aide du pied et située entre l'extrémité basse du manche et la partie haute du fer. Ainsi, avec cette bêche, après avoir fait pénétré verticalement le fer métallique dans le sol puis incliner le manche vers l'arrière d'environ 30 degrés, le jardinier doit appuyer sur la pédale munie d'une dent afin de désengager ladite dent d'un des crans d'une crémaillère circulaire et de permettre la rotation du manche autour de l'axe de ladite crémaillère afin de ramener le manche à la verticale jusqu'à ce que la dent s'engage dans le cran consécutif. Ensuite, il doit à nouveau incliner le manche vers l'arrière d'environ 30 degrés et puis à l'aide de la pédale le ramener à la verticale. Ces mouvements consécutifs sur le manche amènent progressivement, sans efforts importants, le fer de la bêche à remonter vers la surface du sol en soulevant l'enracinement de la plante sous laquelle il est placé, afin de permettre le déplacement de ladite plante. De plus, l'angle d'environ 60 degrés entre le fer et le manche rend le transfert de la plante avec sa motte de terre moins pénible, car il n'oblige pas le jardinier à se baisser jusqu'au sol. Toutefois, la manipulation de la pédale n'est pas très ergonomique et le fait d'avoir une pédale en saillie derrière le manche augmente l'encombrement de l'outil et représente un risque de blessures pour l'utilisateur de cet outil.

La présente invention a pour but de remédier à ces divers inconvénients en proposant un dispositif articulé pour outil de jardin, par exemple une bêche, comportant une articulation entre le manche et la partie tranchante et permettant notamment de déterrer, déraciner et replanter proprement et sans efforts diverses plantations.

A cet égard, la présente invention a pour objet un dispositif articulé pour outil de jardin ou de terrassement, muni d'un manche, par exemple une bêche comprenant une première virole d'axe vertical apte à recevoir en partie supérieure ledit manche, un moyen d'accrochage permettant la fixation d'une des extrémités d'au moins un moyen de rappel et possédant au moins une dent apte à coopérer avec l'un des crans, au moins au nombre de deux, disposés sur la partie supérieure en forme générale de crémaillère partiellement circulaire d'au moins un profil possédant une partie inférieure en forme allongée apte à être fixée notamment sur un fer et pouvant pivoter autour d'une tige horizontale remarquable en ce que la tige est apte à recevoir l'autre extrémité du moyen de rappel et traverse radialement la première virole, à laquelle est lié le moyen d'accrochage, le dispositif comprenant une seconde virole d'axe vertical liée à la première virole par la tige ou le moyen d'accrochage, de sorte à permettre, d'une part, un coulissement axial limité sans rotation de la première virole dans la seconde virole avec une force de rappel des viroles l'une vers l'autre générée par ledit moyen de rappel et, d'autre part, l'engagement ou le désengagement de ladite dent dans l'un des crans permettant ainsi le pliage ou le dépliage du dispositif.

Selon une autre caractéristique de l'invention, afin de rendre l'utilisation moins compliquée et d'éviter toute blessure de l'utilisateur, le dispositif est compact et ne présente aucun élément en saillie.

Le dispositif selon l'invention est particulièrement compact et ergonomique et permet de réaliser des opérations de transplantation de végétaux avec peu d'efforts.

Afin de faire mieux ressortir d'autres avantages et caractéristiques de la présente invention, on décrira ci-après à titre d'exemple non limitatif, une forme d'exécution préférée de ladite invention, en référence aux dessins annexés sur lesquels :
- la figure 1 est une vue en perspective du dispositif articulé pour outil de jardin en position dépliée,
- la figure 2 est une vue en coupe verticale du dispositif articulé pour outil de jardin en position dépliée, suivant la ligne II-II de la figure 1,
- la figure 3 correspondant à la figure 2 montrant le dispositif articulé pour outil de jardin en position pliée.

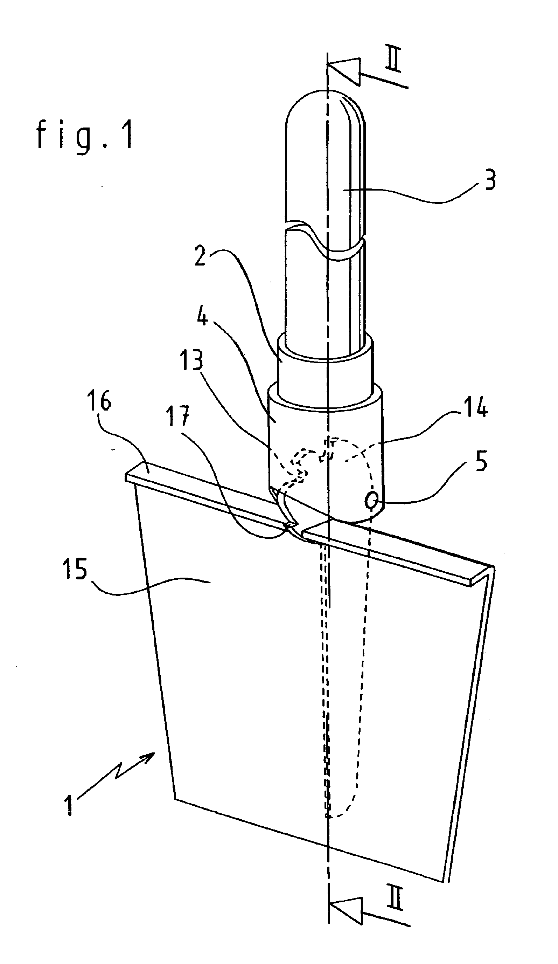

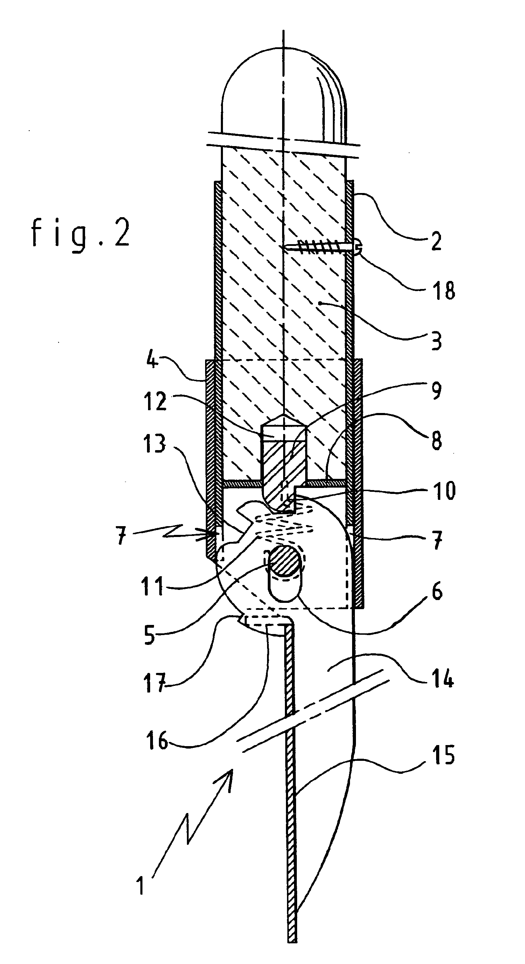

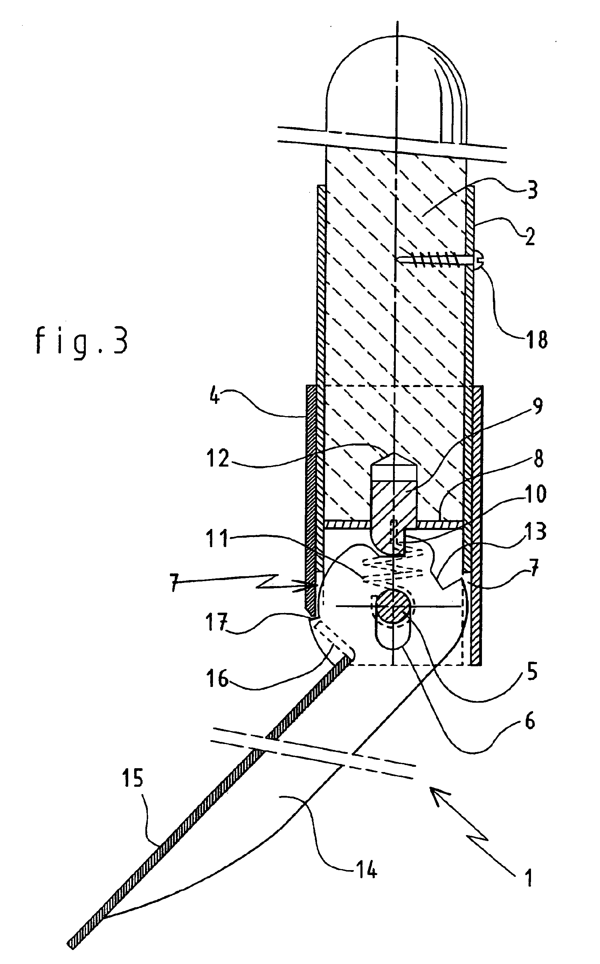

En référence aux figures 1 à 3, le dispositif articulé 1 pour outil de jardin selon l'invention comprend une première virole 2 cylindrique d'axe vertical apte d'une part à recevoir en partie supérieure un manche 3, de préférence en bois, et d'autre part à coulisser axialement dans une seconde virole 4 cylindrique. Ces deux viroles sont reliées entre elles par au moins une tige 5 horizontale, traversant les deux viroles simultanément et radialement de part en part, qui interdit de ce fait la rotation d'une virole par rapport à l'autre. Le déplacement axial de la première virole 2 dans la seconde virole 4 est toutefois assuré par la présence d'au moins deux lumières longitudinales 6, réalisées de part et d'autre de la partie basse de ladite virole 2 et en forme générale d'oblong, aptes à permettre le passage de ladite tige 5 et le coulissement vertical limité d'une virole par rapport à l'autre.

L'Homme du Métier n'éprouvera aucune difficulté pour immobiliser la tige 5 avec la seconde virole 4 par exemple par déformation des extrémités de la tige 5 ou par soudure ou encore avec moyens élastiques déformables tels que des goupilles ou des anneaux élastiques de serrage.

La première virole 2 possède également deux rainures 7 verticales débouchant vers le bas situées dans la partie inférieure de ladite virole 2 et dans un plan perpendiculaire à l'axe de la tige 5.

La première virole 2 comprend en outre un moyen d'accrochage 8 qui est une plaque horizontale en forme générale d'oblong, partiellement fixé, de préférence par soudure, à l'intérieur de ladite première virole 2 entre l'extrémité basse du manche 3 et ladite tige 5, possédant au moins un tenon 9 et au moins une dent 10 issus perpendiculairement du voisinage du milieu de ses faces respectivement supérieure et inférieure et permettant en outre la fixation d'une extrémité d'au moins un moyen de rappel 11, de préférence un ressort hélicoïdal métallique dont l'axe longitudinal est vertical et perpendiculaire à celui de la tige 5. L'autre extrémité du moyen de rappel 11 est fixé sur la tige 5 de manière à créer une force de rappel lors du coulissement de la première virole 2 dans la seconde virole 4 depuis une position serrée vers une position éloignée.

Le manche 3 possède une mortaise 12 réalisée dans la partie basse de sorte que lors de sa mise en place le manche 3 est en appui sur la face supérieure du moyen d'accrochage 8 et maintenu par la première virole 2 et la coopération entre le tenon 8 et la mortaise 12. Il va de soi que le manche 3 est immobilisé de manière classique par un moyen de fixation 18, tel qu'un clou, une vis ou similaire, fixé radialement dans le manche 3 au travers d'un trou situé dans la partie haute de la première virole 2.

La dent 10 est apte à coopérer avec l'un des crans 13, au moins au nombre de deux, disposés sur la partie supérieure d'au moins un profil 14 en forme générale de crémaillère partiellement circulaire. Ce profil 14, qui est situé à l'intérieur de la première virole 2 perpendiculairement à la tige 5 et centré par les deux rainures 7, peut pivoter autour de ladite tige 5, de sorte que lorsque l'on dégage la dent 10 d'un cran 13 en faisant coulisser vers le haut l'ensemble constitué de la première virole 2, du moyen d'accrochage 8 et de la dent 10 dans la seconde virole 4, le profil 14 peut alors pivoter jusqu'à ce que la dent 10 s'engage dans le cran consécutif sous l'action du moyen élastique de rappel 9.

Dans le sens du pliage du dispositif, la dent 10 et les crans 13 ont sur un coté de leur contour des surfaces courbes avec des arrondis limitant la surface de contact, favorisant le glissement et permettant un dégagement aisé de la dent 10 de l'un des crans 13.

Par contre pour éviter le dépliage du dispositif, l'autre coté du contour de la dent 10 et des crans 13 possèdent des surfaces droites avec des angles vifs pour augmenter la surfaces de contact et empêcher un dégagement intempestif de la dent 10 dans l'un des crans 13 dans le sens du dépliage.

De plus, le profil 14 possède une partie inférieure en forme allongée apte à être fixée notamment sur un fer 15 en forme générale de rectangle sensiblement vertical, de préférence métallique, possédant un rebord 16 issu horizontalement vers l'avant de son arête supérieure.

Enfin, le profil 14 possède en outre une butée 17 permettant de limiter la course angulaire du dispositif articulé 1 en venant en appui sur l'extrémité basse de la seconde virole 4.

En outre, pour permettre le pliage du dispositif articulé et la rotation angulaire du fer 15, les première et seconde viroles 2, 4 possèdent une découpe dans leur parties inférieures.

De même, il va de soi que pour pouvoir résister aux efforts mis en oeuvre, tous les composants de ce dispositifs, à l'exception du manche 3, sont de préférence métalliques.

Ainsi constitué l'outil de jardin s'utilise de la manière suivante :
- le jardinier fait pénétrer verticalement le fer 15 dans le sol, en appuyant à l'aide de son pied sur le rebord 16 du fer 15, jusqu'à ce que le rebord 16 soit quasiment en contact avec le sol,
- le jardiner incline ensuite le manche 3 vers l'arrière d'environ 40 degrés par rapport à la verticale,

- puis en appuyant à l'aide de son pied sur le rebord 16 du fer 15, le jardinier tire sur le manche 3 de sorte à dégager la dent 10 du cran 13,
- en maintenant le pied en contact avec le rebord 16, le jardinier doit plier l'outil en ramenant le manche 3 vers la verticale de manière en engager la dent 10 dans le cran 13 consécutif,
- si la plantation n'est pas assez déracinée il est nécessaire de renouveler les deux étapes précédentes, sinon le jardinier peut alors soulever l'outil en position pliée avec la motte de terre et la plante contenues dans le fer métallique et la transporter jusqu'au nouveau lieu de plantation.

Le dispositif articulé de l'outil facilite ainsi le travail du jardinier, surtout s'il s'agit d'une personne âgée, car les efforts à mettre en oeuvre pour déraciner une plante sont moins importants et que ce dernier n'a plus besoin de se baisser jusqu'au sol pour soulever la plante.

L'Homme du métier n'aura aucune difficulté pour dimensionner correctement les différents éléments constitutifs du dispositif articulé 1 afin de résister aux efforts mis en oeuvre et limiter le jeu de fonctionnement dudit dispositif 1.

De plus, il va de soi que le dispositif articulé 1 n'est pas limité aux bêches plates, possédant un fer 15 en forme générale de rectangle sensiblement vertical, mais qu'il peut aussi équipé, d'autres outils de jardins ou de terrassement tels que par exemple des bêches à dents ou des pelles.

Selon une première variante de réalisation non représentée, il va de soi que les première et seconde viroles 2, 4 cylindriques peuvent être facilement remplacées par des viroles de section polygonale telle que par exemple un carré ou un rectangle.

Selon une seconde variante de réalisation non représentée, l'ensemble constitué du moyen d'accrochage 8 et de la dent 10 peut être remplacé par une seule barre, parallèle à la tige 5 et fixé radialement dans la première virole 2, comportant une portion faisant office de dent et permettant la fixation de l'extrémité supérieure du moyen de rappel 11. Toutefois compte tenu des efforts mis en jeu, cette variante nécessite pour ladite barre l'emploi d'un matériau aux caractéristiques mécaniques plus élevées et donc moins économique. De plus, dans cette configuration, le tenon 9 n'existe plus et la résistance mécanique du dispositif articulé 1 est de ce fait un peu réduite.

Cette dernière variante où le moyen d'accrochage 8 et la dent 10 sont confondus permet d'envisager la réalisation d'une forme d'exécution du dispositif dans laquelle les mouvements relatifs des viroles l'une par rapport à l'autre sont inversés. A cette fin, le moyen d'accrochage évolue dans les lumières longitudinales 6 et est lié radialement à la seconde virole 4 extérieure, tandis que l'axe 5 n'est lié qu'à la première virole 2. Ainsi, pour désengager la dent 10, on exercera une traction sur la seconde virole, en gardant le manche immobile.

Afin de renforcer la résistance mécanique de cette variante d'exécution du dispositif, la première virole 2 intérieure comportera à son extrémité inférieure deux bras dans lesquels les lumières 6 seront ménagées et l'axe 5 implanté.

Enfin, il va bien entendu de soi que la présente invention n'est pas limitée aux exemples de réalisation préférentiels décrits, mais qu'elle peut être modifiée ou adaptée en fonction des besoins ou des exigences particulières, sans pour autant sortir du cadre de l'invention.

## Revendications

1. Dispositif articulé (1) pour outil de jardin ou de terrassement, par exemple une bêche, comprenant une première virole (2) d'axe vertical apte à recevoir en partie supérieure un manche (3), un moyen d'accrochage (8) permettant la fixation d'une des extrémités d'au moins un moyen de rappel (11) et possédant au moins une dent (10) apte à coopérer avec l'un des crans (13), au moins au nombre de deux, disposés sur la partie supérieure en forme générale de crémaillère partiellement circulaire d'au moins un profil (14) possédant une partie inférieure en forme allongée apte à être fixée notamment sur un fer (15) et pouvant pivoter autour d'une tige (5) horizontale, **caractérisé en ce que** la tige (5) est apte à recevoir l'autre extrémité du moyen de rappel (11) et traverse radialement la première virole (2), à laquelle est lié le moyen d'accrochage (8), le dispositif comprenant une seconde virole (4) d'axe vertical liée à la première virole (2) par la tige (5) ou le moyen d'accrochage (8), de sorte à permettre, d'une part, un coulissement axial limité sans rotation de la première virole (2) dans la seconde virole (4) avec une force de rappel des viroles (2,4) l'une vers l'autre générée par ledit moyen de rappel (11) et, d'autre part, l'engagement ou le désengagement de ladite dent (10) dans l'un des crans (13) permettant ainsi le pliage ou le dépliage du dispositif (1).

2. Dispositif articulé (1) suivant la revendication 1, **caractérisé en ce que** la première virole (2) comporte au moins deux lumières longitudinales (6) verticales, réalisées de part et d'autre de la partie basse de ladite virole (2) et en forme générale d'oblong.

3. Dispositif articulé (1) suivant l'une des revendications 1 ou 2, **caractérisé en ce que** la première virole (2) comporte, dans un plan longitudinal perpendiculaire à l'axe de la tige (5), au moins deux rainures (7) verticales débouchant vers le bas situées dans la partie inférieure de ladite virole (2).

4. Dispositif articulé (1) suivant l'une quelconque des revendications 1 à 3, **caractérisé en ce que** les première et seconde viroles (2, 4) sont cylindriques.

5. Dispositif articulé (1) suivant l'une quelconque des revendications 1 à 4, **caractérisé en ce que** le moyen de rappel (11) est un ressort hélicoïdal métallique dont l'axe longitudinal est vertical et perpendiculaire à celui de la tige (5).

6. Dispositif articulé (1) suivant l'une quelconque des revendications précédentes, **caractérisé en ce que** le moyen d'accrochage (8) est une plaque en forme générale d'oblong fixée à l'intérieur de la première virole (2) perpendiculairement à son axe longitudinal.

7. Dispositif articulé (1) suivant l'une quelconque des revendications précédentes, **caractérisé en ce que** le moyen d'accrochage (8) possède au moins un tenon (9) issu perpendiculairement du voisinage du milieu de sa face supérieure et apte à coopérer avec au moins une mortaise (12) réalisée dans la face inférieure du manche (3).

8. Dispositif articulé (1) suivant l'une quelconque des revendications 1 à 6, **caractérisé en ce que** le moyen d'accrochage (8) et la dent (10) sont remplacés par une seule barre comportant une portion faisant office de dent et permettant la fixation du moyen de rappel (11).

9. Dispositif articulé (1) suivant l'une quelconque des revendications précédentes, **caractérisé en ce que** la dent (10) et les crans (13) ont des profils respectifs favorisant le pliage du dispositif (1) et rendant le dépliage dudit dispositif (1) plus difficile.

## Claims

1. Articulated device (1) for a garden or excavation tool, for example a spade, comprising a first sleeve (2) with a vertical axis able to receive at the top part a handle (3), an attachment means (8) enabling one of the ends of at least one return means (11) to be fixed and having at least one tooth (10) able to cooperate with one of the notches (13), at least two in number, disposed on the top part, in the general form of a partially circular rack with at least one profile (14) having a bottom elongate-shaped part able to be fixed in particular to a blade (15) and able to pivot about a horizontal rod (5), **characterised in that** the rod (5) is able to receive the other end of the return means (11) and passes radially through the first sleeve (2), to which the attachment means (8) is connected, the device comprising a second sleeve (4) with a vertical axis connected to the first sleeve (2) by the rod (5) or the attachment means (8), so as firstly to allow limited axial sliding without rotation of the first sleeve (2) in the second sleeve (4) with a return force of the sleeves (2, 4) one towards the other generated by said return means (11), and secondly the engagement or disengagement of said tooth (10) in one of the notches (13) thus enabling the device (1) to be folded or unfolded.

2. Articulated device (1) according to claim 1, **characterised in that** the first sleeve (2) has at least two vertical longitudinal apertures (6), produced on either side of the bottom part of said sleeve (2) and in a roughly oblong shape.

3. Articulated device (1) according to one of claims 1 or 2, **characterised in that** the first sleeve (2) has, in a longitudinal plane perpendicular to the axis of the rod (5), at least two vertical grooves (7) emerging downwards, situated in the bottom part of said sleeve (2).

4. Articulated device (1) according to any one of claims 1 to 3, **characterised in that** the first and second sleeves (2, 4) are cylindrical.

5. Articulated device (1) according to any one of claims 1 to 4, **characterised in that** the return means (11) is a metal helical spring the longitudinal axis of which is vertical and perpendicular to that of the rod (5).

6. Articulated device (1) according to any one of the preceding claims, **characterised in that** the attachment means (8) is a roughly oblong-shaped plate fixed to the inside of the first sleeve (2) perpendicular to its longitudinal axis.

7. Articulated device (1) according to any one of the preceding claims, **characterised in that** the attachment means (8) has at least one tenon (9) issuing perpendicularly from the vicinity of the middle of the top face thereof and able to cooperate with at least one mortise (12) produced in the bottom face of the handle (3).

8. Articulated device (1) according to any one of claims 1 to 6, **characterised in that** the attachment means (8) and the tooth (10) are replaced by a single bar comprising a portion serving as a tooth and enabling the return means (11) to be fixed.

9. Articulated device (1) according to any one of the preceding claims, **characterised in that** the tooth (10) and the notches (13) have respective profiles assisting the folding of the device (1) and making unfolding of said device (1) more difficult.

## Patentansprüche

1. Gelenkvorrichtung (1) für ein Garten- oder Grabwerkzeug, z.B. einen Spaten, umfassend eine erste Zwinge (2) mit senkrechter Achse, die dazu geeignet ist, als oberen Teil einen Griff (3) aufzunehmen, ein Einhängemittel (8), das die Befestigung eines der Enden mindestens eines Rückstellmittels (11) ermöglicht und mindestens einen Zahn (10) besitzt, der dazu geeignet ist, mit einer der Einkerbungen (13) zusammenzuwirken, von denen mindestens zwei vorhanden sind und auf dem oberen Teil in der allgemeinen Form einer kreisförmigen Ratsche mindestens eines Profils (14) angeordnet sind, das einen unteren Teil länglicher Form besitzt, der dazu geeignet ist, insbesondere an einem Eisen (15) befestigt zu werden und um einen waagerechten Stab (5) schwenken kann, **dadurch gekennzeichnet, dass** der Stab (5) in der Lage ist, das andere Ende des Rückstellmittels (11) aufzunehmen und radial durch die erste Zwinge (2) geht, mit der das Einhängemittel (8) verbunden ist, wobei die Vorrichtung eine zweite Zwinge (4) mit einer senkrechten Achse umfasst, die mit der ersten Zwinge (2) über den Stab (5) oder das Einhängemittel (8) verbunden ist, um einerseits ein beschränktes Axialgleiten ohne Drehung der ersten Zwinge (2) in der zweiten Zwinge (4), mit einer Rückstellkraft der Zwingen (2, 4) zueinander, die von dem Rückstellmittel (11) erzeugt wird, und andererseits den Eingriff oder das Lösen des Zahns (10) in bzw. aus einer der Einkerbungen (13) zu ermöglichen, wodurch somit das Zusammenklappen oder das Aufklappen der Vorrichtung (1) ermöglicht wird.

2. Gelenkvorrichtung (1) nach Anspruch 1, **dadurch gekennzeichnet, dass** die erste Zwinge (2) mindestens zwei senkrechte Längsschlitzlöcher (6) umfasst, die auf beiden Seiten des unteren Teils der Zwinge (2) und in einer allgemeinen länglichen Form ausgebildet sind.

3. Gelenkvorrichtung (1) nach einem der Ansprüche 1 oder 2, **dadurch gekennzeichnet, dass** die erste Zwinge (2) in einer Längsebene rechtwinklig zur Achse des Stabes (5) mindestens zwei senkrechte Rillen (7) umfasst, die nach unten ausmünden und in dem unteren Teil der Zwinge (2) angeordnet sind.

4. Gelenkvorrichtung (1) nach einem der Ansprüche 1 bis 3, **dadurch gekennzeichnet, dass** die ersten und zweiten Zwingen (2, 4) zylindrisch sind.

5. Gelenkvorrichtung (1) nach einem der Ansprüche 1 bis 4, **dadurch gekennzeichnet, dass** das Rückstellmittel (11) eine metallische Schraubenfeder ist, deren Längsachse senkrecht und rechtwinklig zu derjenigen des Stabes (5) ist.

6. Gelenkvorrichtung (1) nach einem der vorhergehenden Ansprüche, **dadurch gekennzeichnet, dass** das Einhängemittel (8) eine Platte mit allgemeiner länglicher Form ist, die im Innern der ersten Zwinge (2) rechtwinklig zu ihrer Längsachse befestigt ist.

7. Gelenkvorrichtung (1) nach einem der vorhergehenden Ansprüche, **dadurch gekennzeichnet, dass** das Einhängemittel (8) mindestens einen Zapfen (9) besitzt, der rechtwinklig aus der Nähe der Mitte seiner oberen Seite stammt und dazu geeignet ist, mit mindestens einem Zapfenloch (12) zusammenzuwirken, das in der unteren Seite des Griffs (3) ausgebildet ist.

8. Gelenkvorrichtung (1) nach einem der Ansprüche 1 bis 6, **dadurch gekennzeichnet, dass** das Einhängemittel (8) und der Zahn (10) durch eine einzige Stange ersetzt werden, die einen Abschnitt umfasst, der als Zahn dient und die Befestigung des Rückstellmittels (11) ermöglicht.

9. Gelenkvorrichtung (1) nach einem der vorhergehenden Ansprüche, **dadurch gekennzeichnet, dass** der Zahn (10) und die Einkerbungen (13) jeweilige Profile aufweisen, die das Zusammenklappen der Vorrichtung (1) erleichtern und das Aufklappen der Vorrichtung (1) erschweren.
